# EUROPEAN PATENT APPLICATION

(11) **EP 2 386 807 A1**
(43) Date of publication of application: **16.11.2011**
(21) Application number: 10162446.8
(22) Date of filing: 10.05.2010
(51) Int. Cl.: F24J 2/52, H01L 31/048

(54) **Support device for a solar power generator assembly, solar power generator assembly comprising said device and installation method therefor.**

(71) Applicant: T-Solar Global, S.A., 36211 Vigo (ES)
(72) Inventor: González González, Tamara, 32004 Ourense (ES); Gonçalves Ventura, Paulo José, 32005 Ourense (ES); Andreu Batallé, Jordi, 08029 Barcelona (ES)
(74) Representative: ZBM Patents

(57) **Abstract**

A support device (100) for a solar power generator assembly (1) is provided comprising a single piece support body (110) for receiving at least part of a solar module (200) and for being appended to a target surface (300), and having at least one housing (130) formed therein for receiving ballast and attaching points (160) for receiving corresponding projections (187) formed on an attaching device (180). A solar power generator assembly (1) comprises at least one solar module (200) fitted on said support device (100).

Its simplicity and low weight make that a cost effective solar power generator assembly (1) of the integrated type can be obtained that may become part of an existing standard building roof (300) along with architectonical elements, with this being a simple and aesthetic solution for solar energy production.

## Description

### Description

The present invention relates to a support device for a solar power generator assembly and more particularly to a device for supporting a part of a solar module or even one or several entire solar modules in a solar power generator assembly. Although the invention may have many applications, it has been found to be particularly advantageous for flat roofs in buildings and the like.

### BACKGROUND ART

Solar power generation assemblies in buildings have been increasingly developed and employed in the last decade due to their inherent advantages, particularly in roofing. Solar energy is a totally silent, renewable, clean (non-polluting) resource and the solar panel assemblies currently used have a very little maintenance.

Typical solar power generation assemblies comprise a plurality of photovoltaic (PV) solar modules or panels that are assembled electrically and mechanically into an array. Each solar module carries a plurality of individual photovoltaic (PV) cells. PV cells capture sunlight and store it in suitable energy storing means (e.g. a battery). The energy stored therein is then transformed into usable electricity for delivering a selected level of working voltage. Solar modules can also deliver the generated current to the grid by means of suitable equipment.

In order to capture sunlight, the solar panel assemblies are usually installed in remote areas for directly receiving light, such as for example rooftops in buildings or the like. This makes transportation of the solar panel assembly parts (panels, supports members, frames, wiring, etc) to be difficult and expensive.

One example of a known solar power generation assembly is disclosed in US6968654. The solar power generation assembly described in this document comprises a mounting structure that is of the open type. The mounting structure is made of several parts such as a metal frame including several panel supports, an insulating mat, a solar panel, etc. Inside the frame of the structure ballast can be provided to keep the panel unit stationary.

A further prior art solar power generation assembly is the one disclosed in US4226256. The solar panel assembly disclosed in this document has solar panels and support members forming support means. Ballast members can be received in a space defined by upstanding sides and spaced apart flanges.

A further example of a known solar power generation assembly is disclosed in US2005217716, which comprises solar cell panels and ballast elements placed on racks for holding the solar cell panels. The ballast elements are, for example, concrete or metal blocks.

Still a further example of a known solar power generation assembly is disclosed in W02009158710. In this case, the solar panel assembly is fitted in a frame and it is provided with a ballast tray. The solar power generation assembly is fitted on a flat installation surface, e.g., a flat rooftop. The tray is adapted to contain ballast, and it can be removed from the assembly.

These known prior art solar panel assemblies all involve the provision of support means comprising several parts for supporting the panels on the roof. Such support means are necessary to fix the panels and they are in turn fixed to the framework or structure of the building. This usually further involves the provision of additional several parts for insulation. All of this makes the overall assembly to be costly, heavy and therefore cumbersome.

In addition, solar panel assemblies are also known in the field of solar power generation in buildings which are fixed directly anchored to the structure of the building. This solution is usually combined with the use of panel configurations such that they become integrated with the building roof by being flush mounted and fitted on the top surface of an existing building roof as a covering for the building. This type of solar panel assemblies is commonly referred to as building integrated photovoltaic assemblies.

One example of such BIPV solar panel assemblies is disclosed in WO2010028647. The solar panel comprises solar panel elements consisting of a transmission plate, an absorber housing and an absorber member. The transmission plate has greater extension than the absorber housing, and the transmission plate, compared with the absorber housing, has a protruding part, preferably for overlapping on a roof or facade element.

Such known integrated solar panel assemblies have the disadvantage that they still employ fixing means such as retainers or clamps for fixing the solar panels which makes the assembly complex and expensive. The fixing means further involve roof penetrations and therefore structural changes to the building. This is an important issue since these fixing means often pass through the waterproofing elements of the roof, thus creating critical points where they may produce heat leakage through thermal bridges, and also providing entry for water into the building.

### SUMMARY OF THE INVENTION

The present invention seeks to solve the above mentioned prior art problems by providing a support device for a solar power generator assembly as defined in claim 1, which is lightweight and compact in size so transportation and operations of installation and maintenance become easy and cost effective.

The support device of the invention is suitable for solar power generator assemblies of the integrated type to be installed in existing or new roofing. The invention finds a wide variety of applications from horizontal to sloped roofs.

More particularly, the invention provides a support device for a solar power generator assembly. In this respect, a solar power generator assembly as defined in claim 10 may comprise one or several PV solar modules that, in use, are assembled electrically and mechanically to each other and fitted on at least one of such support device. Each solar module of the solar power generator assembly comprises a transparent top surface (usually made of glass) and a plurality of interconnected PV cells.

The support device according to the invention comprises a support body that is suitable for receiving at least part of one of such solar modules. This means that each support body is suitable for receiving part of one solar module, an entire solar module or even a plurality of solar modules.

The support body of the support device according to the present invention is also suitable for being appended to a target surface. Within the context of the present invention, a target surface means any suitable surface on which the solar power generator assembly is to be installed. One embodiment of a suitable target surface may be a substantially flat surface, for example a rooftop or a part thereof.

The support body of the support device according to the invention is a single piece body made of a thermally insulating material. The term single piece body as used herein means a body consisting of or constituting a single unit or part. The support body has at least one housing formed therein which can be formed on at least one lateral surface of the supporting body. In a preferred embodiment of the invention, the support body comprises a series of housings formed in each lateral surface thereof and having the same or different shapes and/or sizes to each other. In this respect, the housing or housings formed in the support body is/are adapted in number, size, shape, etc. for receiving ballast members for holding the support device to said target surface. Ballast members as used herein means weight elements such as for example standard building bricks that are applied to the support device, that is, fitted into one or several of the corresponding housings of the support body to keep the device stability to the target surface. The number of ballast members to be fitted into a corresponding housing of the support body will according to the requirements keep the support device stationary on the target surface.

The support device may further include at least one layer of material. This layer of material may be present at any location of the support body as required, such as for example on a top surface and/or on one or several lateral surfaces thereof. The layer of material may comprise a suitable adhesive for attaching at least one of the above mentioned solar modules to the support device. Alternatively or in addition, the layer of material may be an aluminium sheet. More than one layer comprising one or more different materials may be included in the support device.

The support body may be provided with at least one attaching point that may be formed in at least one corner portion thereof. The attaching point, as it will be explained in detail below, allows support bodies to be flush mounted and attached to one another. More particularly, the attaching point comprises a hole that is sized, shaped and configured for receiving a projection such as a substantially upright prong formed on at least one corner of an attaching device. Said attaching device is provided for alignment and attachment of adjacent support bodies of corresponding support devices to each other. The attaching device may comprise, for example, a base plate having at least two of such upright prongs (usually four) for being inserted into said corresponding attaching points or holes formed in the respective support bodies. In use, the base plate of the attaching device rests on the target surface.

The support body of the support device is provided with suitable guiding means for wiring as well as recesses for connection boxes for the electrical connection of the solar modules.

The support body may have any desired shape and geometrical configuration. The support body may also have a top surface that is arranged horizontal or sloped relative to the horizontal.

As stated above, a solar power generator assembly as defined in claim 10 is further provided according to the invention. Such a solar power generator assembly comprises at least one solar module, preferably a number of them, having a support device each comprising a support body as defined above onto which at least one solar module is fitted.

The invention still further relates to a method for installing said solar module assembly, as defined in claim 14. More particularly, the installation method comprises the steps of providing one support device as defined above and placing it on a target surface, such as a substantially flat surface, for example a building rooftop. Part of one solar module or an entire single solar module or even a plurality of solar modules is fitted on the top surface of the support body, whether it is horizontal or sloped. Ballast members, such as standard building bricks, are then inserted into housings formed in the support device for keeping it stationary on the roof surface. The solar module wiring is subsequently connected. Further support devices are mounted where necessary according to the number of solar modules required according to the power to be generated. The solar module assembly is installed such that the solar modules are arranged adjacent to each other forming an array. The support devices can be held in position by first placing an attaching device on the substantially flat surface with its prongs projecting upwards and inserting said prongs into attaching points of the first and the second adjacent support devices. A step of electrically connecting several solar modules in the assembly to each other are further carried out.

It has been found that with a support device for a solar power generator assembly according to the present invention, and/or with a solar power generator assembly having such a support device, and/or with the above mentioned installation method, a great number of advantages are achieved. First, by the provision of the support device of the invention, a solar power generator assembly can be quickly and easily constructed. A significant advantage of the invention is that transport operations become more efficient even when the solar power generator assembly is installed in remote areas. Due to the constructive simplicity of the support device and its low weight, transport operations are cost effective and fast: no frames or complex structures are required for supporting the solar modules on the roof and fixing means such as retainers or clamps are no longer necessary for fixing the solar modules thus making the anchoring operation fast, simple and cost effective. Another advantage is that the ballast weight can be chosen in accordance with the wind load conditions of the specific installation.

With the above disclosed support device, a solar power generator assembly of the integrated type is obtained. Its simplicity results in that the assembly, once installed, becomes part of the existing standard building roofs along with architectonical elements such as vegetation, wood, gravel and pedestrian ways. This results in a simple and aesthetic solution for solar energy production in buildings while complying with the main characteristics of the existing building roof such as, for example, water isolation, heating, cooling, etc. Such an aesthetic feature provides the building with a uniform appearance due to the integrated solar system.

The installation method of the invention has been proven to be very fast as compared to prior art solar module installation methods that involved fitting a great number of parts. With the installation method of the invention, time spent on installing the above described assembly is highly reduced which involves that new and existing buildings can be rapidly transformed into a solar power generator integrated therein. The installation method is also quite simple both for assembling and disassembling operations. Roof repairing and maintenance operations can be therefore carried out more easily. It is important to take into account that with the installation method according to the invention, roof penetrations are no longer necessary and therefore leakages to building interior are efficiently eliminated.

### BRIEF DESCRIPTION OF THE DRAWINGS

A particular embodiment of a support device for a solar power generator assembly will be described in the following only by way of non-limiting example and with reference to the appended drawings.

In said drawings:
Figure 1 is a top plan view of a solar power generator assembly according to one embodiment of the present invention in which one support device is shown;
Figure 2 is a side view of the solar power generator assembly shown in figure 1;
Figure 3 is an elevational view of the solar power generator assembly shown in figure 1;
Figure 4 is a perspective view the embodiment in figure 1;
Figure 5 is a close up view of the highlighted detail in figure 4;
Figure 6 is a top plan view of a solar power generator assembly according to one embodiment of the present invention in which two mutually adjacent support devices are shown;
Figure 7 is a perspective view of the two mutually adjacent support devices forming the solar power generator assembly shown in figure 6;
Figure 8 is a top plan view of one embodiment of an attaching device for the solar power generator assembly in figures 1-5;
Figure 9 is a side view of the attaching device shown in figure 8; and
Figure 10 is a perspective view of the attaching device shown in figure 8.

### DETAILED DESCRIPTION ONE EMBODIMENT OF THE INVENTION

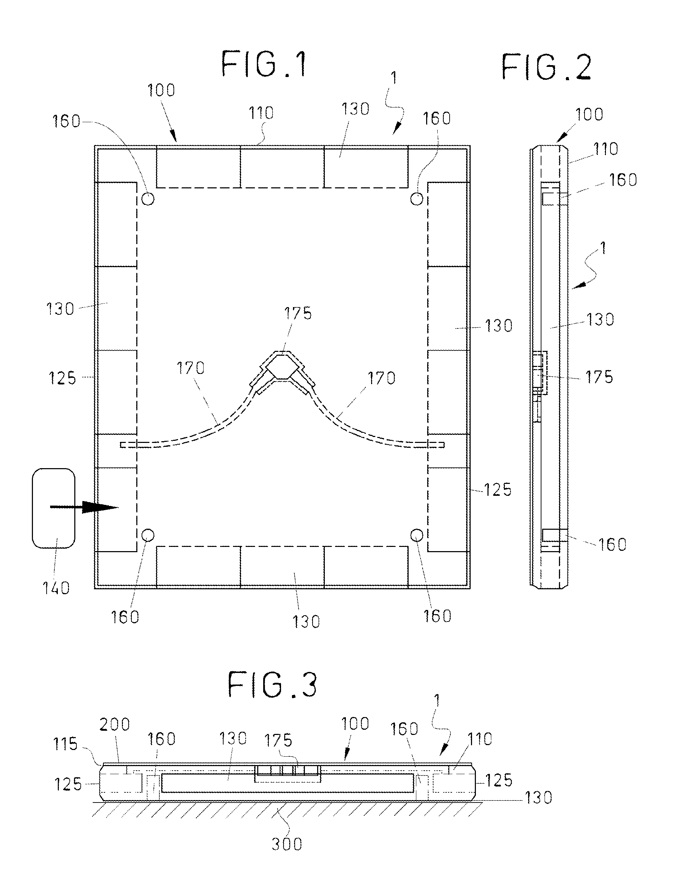

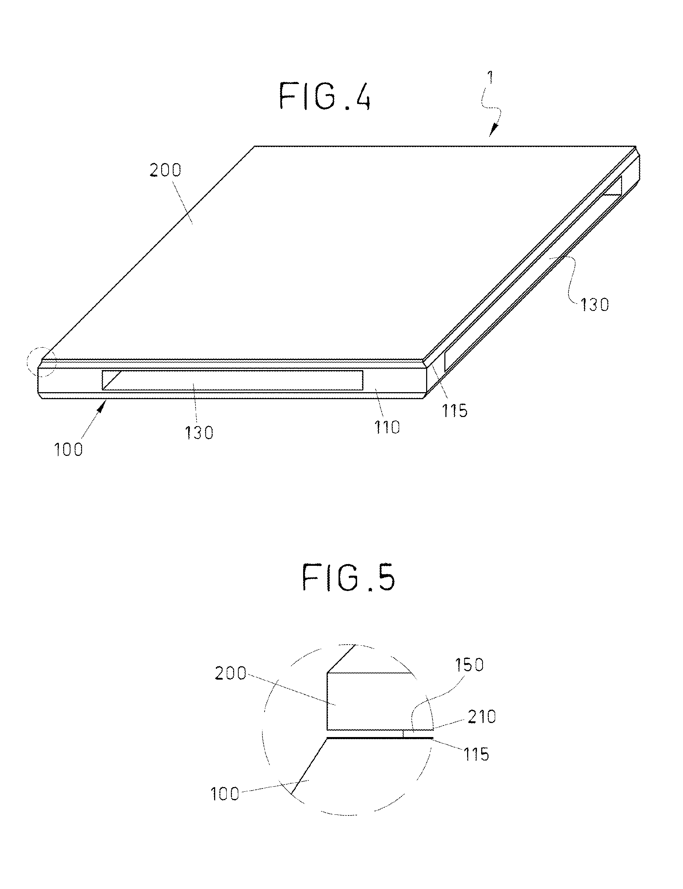

One embodiment of a solar power generator assembly according to the invention is herein disclosed in connection with the drawings in which a support device according to the invention is provided. In the embodiment shown in figures 1-7, the solar power generator assembly has been indicated as a whole at 1.

One embodiment of such support devices that are part of a solar power generator assembly 1 has been shown in the figures and it has been denoted as a whole at 100. The support device 100 of the solar power generator assembly 1 comprises a support body 110. Support body 110 is a single piece body, i.e, formed as a unitary block, having a top surface 115, a bottom surface 120, and lateral surfaces 125. Lateral surfaces 125 are side, front and rear lateral surfaces 125.

The top surface 115 of the support body 110 in the example shown in figures 1-7 is a horizontal surface. The configuration of the support body 110 is not however limited to such particular configuration, and top surface 115 may be sloped. In general, the top surface 115 can be of any configuration as long as it is suitable for receiving part of a PV solar module 200, an entire single solar module 200 or a plurality of solar modules 200. In the example shown in figure 2, the solar power generator assembly 1 comprises a support device 100 that is placed on a target surface 300 and it is provided with a solar module 200 attached thereon (see figures 2, 4, 5 and 7). Solar module 200 comprises a transparent top surface made of glass and a plurality of interconnected PV cells such as for example thin-film photovoltaic cells.

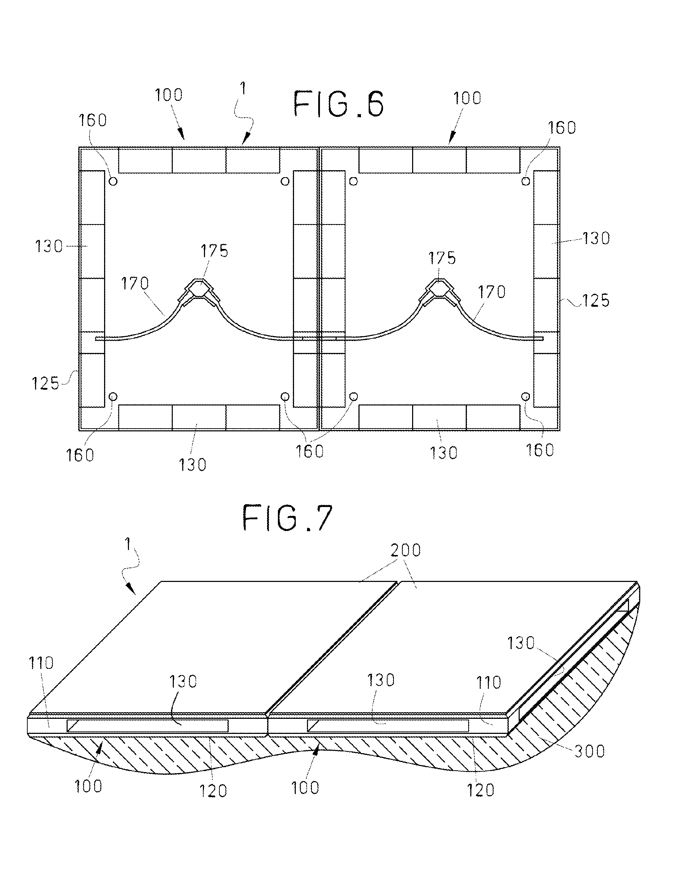

The bottom surface 120 of the support body 110 is a horizontal surface although it is not limited to this particular configuration but it may be of any configuration as long as it is suitable for being appended to or placed on the target surface 300 as diagrammatically shown in figures 3 and 7. This target surface 300 onto which the support device 100 is to be placed is a substantially flat surface, such as for example a rooftop or a part thereof. The substantially flat surface 300 may be horizontal or even sloped (typically of the order of 5°).

The piece support body 110 is made of a suitable thermally insulating material, such as polyisocyanurate or extruded polystyrene. In this way, power generation and thermal isolation are provided: the solar power generator assembly 1 allows the building roof 300 to be thermally isolated while generating energy. The support body 110 is treated with a suitable protection paint to protect it from UV radiation. Paint is applied to the complete area to be exposed to the solar radiation such as the lateral surfaces 125 and the area below the edges of the solar module 200.

The support body 110 has a number of housings 130 formed in the lateral surfaces 125 thereof. In the example shown in the figures, the support body 110 is provided a housing 130 formed in each side lateral surfaces 125 and a housing 130 formed in the front and rear lateral surfaces 125, respectively, as shown in figure 1.

The housings 130 formed in the lateral surfaces 125 of the support body 110 are shown as having a prismatic configuration. Housings 130 may of course be shaped otherwise as long as they can receive at least one ballast member 140. One example of a ballast member 140 to be used in the support device 100 of the invention is diagrammatically shown in figure 1. Although only one ballast member 140 has been shown in the drawings it is to be understood that the number of ballast members 140 may be as required. In this respect, the housings 130 in the lateral surfaces 125 of the support body 110 may be fully or partly provided with ballast members 140. Therefore, the housings 130 are so adapted in number, size and shape for fully or partly receiving the necessary ballast members 140.

Ballast members 140 may be any weight elements of any desired shape and of any suitable material as long as they can be fitted within the housings 130 and be of any suitable weight for keeping the support device 100 and the solar module or modules 200 stationary on the target surface 300. In the example shown, the ballast members 140 consist of standard bricks of the type commonly used for masonry construction, that is, prismatic shaped pieces which may exhibit a wide variety of sizes, for example within a ranges of 200-250 mm x 100-120 mm x 55-75 mm in size and in a range of 2,5-3,0 Kg in weight for each brick unit. According to this, an exemplary embodiment of such a power generator assembly 1 would have a size of about 1320 mm x 1120 mm x 105 mm and a weight ranging from 32 kg to 74 kg depending upon ballast 140. Ballast 140 is however not limited to the above particular embodiment.

In the embodiment shown, the support device 100 further includes one layer of material 150 that may be arranged between the top surface 115 of the support body 110 and the lower surface 210 of the solar module 200 applied thereon. The layer of material 150 of the support device 100 comprises a suitable adhesive for attaching the solar module 200 to the support body 110. More layers 150 of the same or different materials (such as for example aluminium) can be applied to the support device 100 as required.

Now referring to figure 1, the support body 110 of the support device 100 is provided with four attaching points 160 each formed substantially at every corner portion of the support body 110 as shown in figures 1 and 6. The attaching points 160 in the support body 110 are in the form of cylindrical holes although other shapes are of course possible. The support body 110 is further provided with guiding means 170 for wiring as well as recesses 175 for connecting boxes, as shown in figures 2 and 3.

The arrangement of several solar modules 200 and the corresponding support devices 100 in a solar power generator assembly 1 will be described below with reference to figures 6 and 7.

Solar power generator assembly 1 comprises two support devices 100 as shown figures 6 and 7 as an example. Other number of support devices 100, for example six or even more, may be provided for forming a solar power generator assembly 1 as required. A corresponding number of solar modules 200 assembled electrically and mechanically to each other are also provided for forming the solar power generator assembly 1. The resulting solar power generator assembly 1 is suitable for solar power generator constructions integrated with the existing roof 300. The particular construction of the solar power generator assembly 1 herein disclosed makes possible to walk on, for example for carrying out maintenance operations.

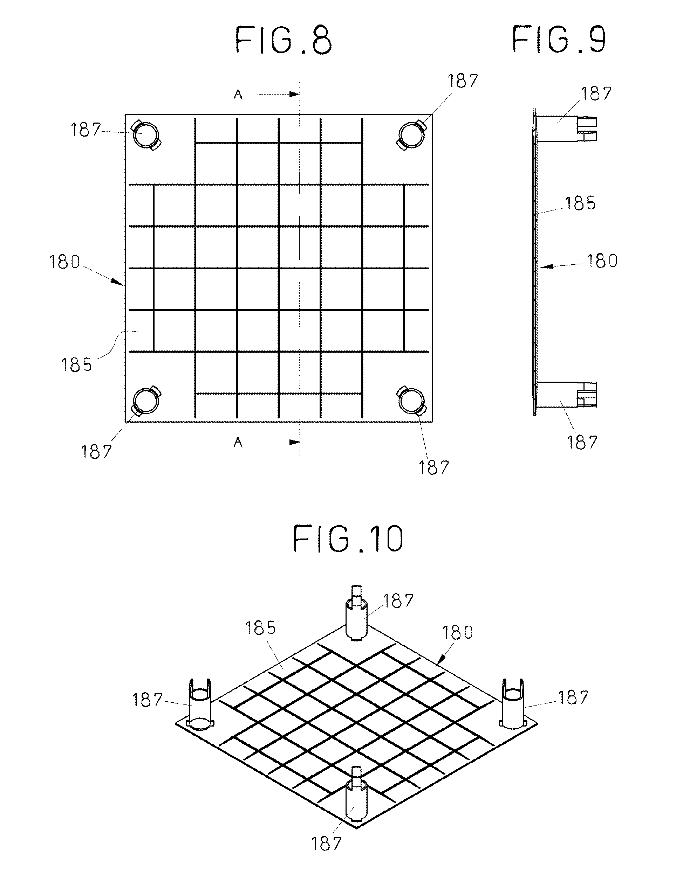

For installing the solar module assembly 1 shown, attaching devices 180 are provided, one exemplary embodiment of which is shown in figures 8-10. The purpose of the attaching devices 180 is to keep adjacent support bodies 110 attached to each other and improve the wind load resistance. Each attaching device 180 comprises a base plate 185 having, for example, a substantially square shape. The base plate 185 of the attaching device 180 is provided with four upright projections or prongs 187 formed at respective corners thereof. Each projection or prong 187 project upwardly from each corner portion of the base plate 185 as shown in figures 9 and 10. Each projection 187 is shaped for being inserted into corresponding attaching points 160 of respective, different, adjacent support bodies 110. In use, and having four adjacent support bodies 110, the projections 185 of an attaching device 180 are inserted in attaching points 160 of different support bodies 110. The base plate 185 of the attaching device 180 is adapted for resting on the target surface 300 when in use.

The installation process of the solar module assembly 1 starts by placing one or several of such attaching devices 180 with the base plate 185 on the target surface 300, that is, on the building roof. Then, a support device 100, having a PV solar module 200 glued on the top surface 115 of the support body 110 is placed on the roof 300 in a way that one prong 185 of one attaching device 180 is fitted within one attaching point 160 of the support body 110 in said support device 100. The prong fitting operation is repeated for further adjacent support devices 100 along with their corresponding solar modules 200. Afterwards, the necessary ballast members 140, such as standard bricks as described above, are then inserted into the housings 130 of the respective support bodies 110. Then, the solar module wiring is subsequently connected (cables can be fixed to the support body 110 through the use of, for example, a tape) once the connection box has been fitted within the corresponding recess 175.

Further support devices 100 can be mounted and connected through the use of attaching devices 180 as described where necessary according to the power requirements for the solar module assembly 1.

As described above, the support device 100 is provided with a solar module 200 glued on the top surface 115 of the support body 110. The attachment of the solar module 200 on the support body 110 is carried out by applying a small quantity (e.g. 100 g) of a suitable adhesive that is supplied through a pneumatic dispenser (which is connected to the facilities and loaded with the adhesive) on the solar module 200 by forming a circular path of, for example, 4 mm width. Channels 170 for wiring are sealed with adhesive in both sides of a connection box (not shown). Then, the solar module 200 is put over the support body 110 with the connecting box recess 175 facing and aligned with the connecting box. Cables (not shown) are held by the free tips thereof and introduced them into the guiding means 170. The solar module 200 is then put completely in contact with the support body 110 of the support device 100 with its corners aligned. The solar modules 200 are then pressed against the support body 110 of the support device 100 until the adhesive is completely cured.

It will be clear that the support device 100 herein described and shown by way of a non-limiting example serves the purpose of supporting one or several solar modules (or panels) 200 for forming a solar power generator assembly 1, but it is to be noted that such support device 100 as described, effectively performs further several functions such as guide for wiring, thermal insulation, etc.

While particular embodiments and examples have been described, it is understood that, after learning the teachings contained in this disclosure, amendments and generalizations will be apparent to those skilled in the art without departing from the scope of the disclosed embodiments.

## Claims

1. A support device (100) for a solar power generator assembly (1) comprising a support body (110) suitable for receiving at least part of a solar module (200) and for being appended to a target surface (300), **characterized in that** the support body (110) is a single piece body (110) having at least one housing (130) formed therein adapted for receiving ballast members (140) for holding the support device (100) to said target surface (300).

2. A device (100) as claimed in claim 1, wherein the support device (100) further comprises at least one layer of material (150).

3. A device (100) as claimed in claim 2, said layer of material (150) is arranged on a top surface (115) of the support body.

4. A device (100) as claimed in claim 2 or claim 3, wherein said layer of material (150) comprises adhesive for attaching at least one solar module (200).

5. A device (100) as claimed in claim 2 or claim 3, wherein said layer of material (150) is an aluminium sheet.

6. A device (100) as claimed in any of the preceding claims, wherein the support body (110) is made of a thermally insulating material.

7. A device (100) as claimed in any of the preceding claims, wherein the housing (130) is formed on at least one lateral surface (125) of the supporting body (110).

8. A device (100) as claimed in any of the preceding claims, wherein it comprises a plurality of housings (130) formed therein.

9. A device (100) as claimed in any of the preceding claims, wherein the housing (130) is sized for receiving therein at least one standard building brick (140).

10. A device (100) as claimed in any of the preceding claims, wherein the support body (1109 has at least one attaching point (160) formed in at least one corner thereof for attachment to an adjacent support body (110) of a corresponding support device (100).

11. A device (100) as claimed in any of the preceding claims, wherein the support body (110) is provided with guiding means (170) for wiring.

12. A device (100) as claimed in any of the preceding claims, wherein the support body (110) has a top surface (115) that is arranged horizontal.

13. A device (100) as claimed in any of the claims 1 to 11, wherein the support body (110) has a top surface (115) that is arranged sloped relative to the horizontal.

14. A device (100) as claimed in any of the preceding claims, wherein said target surface (300) is a substantially flat surface.

15. A device (100) as claimed in claim 14, wherein the substantially flat surface (300) is at least part of a rooftop.

16. A solar power generator assembly (1) comprising at least one solar module (200), **characterized in that** it further comprises a support device (100) as claimed in any of the preceding claims onto which at least part of the solar module (200) is fitted.

17. Assembly (1) as claimed in claim 16, wherein it further comprises an attaching device (180) for attachment to an adjacent support body (110) of a corresponding support device (100).

18. Assembly (1) as claimed in claim 17, wherein the attaching device (180) comprises a base plate (185) having at least two projections (187) for being inserted into corresponding attaching points (160) formed in respective support devices (100).

19. An installation method for a solar module assembly (1), **characterized in that** the method comprises the steps of:
- providing a first support device (100) as claimed in any of the claims 1 to 15 and placing it on a target surface (300),
- inserting ballast members (140) into housings (130) formed in the support device (100); and
- connecting the first solar module electrical wiring.

20. A method as claimed in claim 19, wherein said method further comprises the step of fitting at least part of one solar module (200) on the top surface (115) of the support body (110) of said support device (100).

21. A method as claimed in claim 19 or claim 20, wherein said method further comprises the step of placing at least a second, additional support device (100), adjacent to said first support device (100), then inserting ballast members (140) into the housings (130) in the second support device (100) and connecting the corresponding module electrical wiring.

22. A method as claimed in claim 21, wherein said method further comprises the step of placing an attaching device (180) on the substantially flat surface (300) and inserting its projections (187) into attaching points (160) of adjacent support devices (100).
